# EUROPEAN PATENT APPLICATION

(11) **EP 2 107 448 A2**
(43) Date of publication of application: **07.10.2009**
(21) Application number: 09003217.8
(22) Date of filing: 05.03.2009
(51) Int. Cl.: G06F 3/048

(54) **Electronic apparatus and control method thereof**

(30) Priority: 02.04.2008 TW 97111968
(71) Applicant: ASUSTeK Computer Inc., Peitou, Taipei City (TW)
(72) Inventor: Wang, Ho-Jeh, Taipei City (TW); Lin, Kou-Liang, Taipei City (TW)
(74) Representative: Hager, Thomas Johannes

(57) **Abstract**

A control method for an electronic apparatus having a touch screen is disclosed. The method comprises the following steps. Contact with the touch screen is first detected. It is next determined whether the contact is initiated by a finger or a stylus. After determining that the contact is initiated by the finger, an input gesture from a motion of the finger is further determined based on a predetermined rule. Thereafter, the visual effects of the target screen currently operating are triggered accordingly in response to the determined input gesture.

## Description

### CROSS REFERENCE TO RELATED APPILCATIONS

This Application claims priority of Taiwan Patent Application No. 097111968, filed on April 2, 2008, the entirety of which is incorporated by reference herein.

### BACKGROUND OF THE INVENTION

### Field of the Invention

The invention relates to an electronic apparatus and control method thereof, and more particularly, to an electronic apparatus having a touch screen and control method thereof.

### Description of the Related Art

Driven by user requirements, more and more electronic devices, especially handheld or portable electronic devices such as smart phones, personal digital assistants (PDAs), tablet PCs or Ultra Mobile PCs (UMPCs), and each of these comprises a touch screen. The touchable or touch screen can be directly touched by users and used as one of the main input devices. Specifically, users operate the electronic device through a touch-and-select function, whereby one of the items or programs displayed on the touch screen is controlled or performed by directly touching the item or program on the touch screen. For example, a user may touch-and-select a button or an icon that represents a multimedia playing function to perform a multimedia playback or touch-and-select a button or an icon that represents a GPS navigation function to perform a GPS related program.

For current touch screens, one operation can be performed by directly selecting a target item representing the operation. A pointing device, such as a finger(s), a fingertip(s) or a stylus, is applied for touching and making selections on the touch screen. That is, pointing devices are inevitable in the scenarios mentioned above, wherein users use them to perform specific functions on the electronic devices.

However, for a conventional resistive type touch screen, it can not recognize whether the finger or the stylus is selected. Since it means no difference between the finger contact and the stylus contact to the electronic apparatus, they are processed in the same way.

### BRIEF SUMMARY OF THE INVENTION

A control method for an electronic apparatus having a touch screen that can differentiate between contact or control by a finger or a stylus is disclosed for providing further control of the electronic apparatus for users.

The method comprises the following steps. Contact with the touch screen is first detected. Next, whether the contact is initiated by a finger or a stylus is determined. Thereafter, an input gesture type generated from a motion of the finger is determined based on a predetermined rule after determining that the contact is initiated by the finger. Then, visual effects of a target screen currently operating is triggered in response to the determined input gesture type.

An electronic apparatus is further disclosed. The electronic apparatus comprises a touch screen, a detection unit and a processing unit. The detection unit is used for detecting whether the touch screen is contacted. The processing unit determines whether the contact is initiated by a finger or a stylus. When the finger contact is identified, the motion of the finger is further analyzed to see if it can be matched with a predefined gesture pattern. If any gesture pattern is recognized in the former step, the visual effects corresponding to the designated pattern will be triggered.

Control methods and electronic apparatuses may take the form of an executable code embodied in any type of media. When the executable code is loaded and executed by a processor, the processor becomes the apparatus for practicing the disclosed method.

### BRIEF DESCRIPTION OF THE DRAWINGS

The invention can be more fully understood by reading the subsequent detailed description and examples with reference to the accompanying drawings, wherein:

Fig. 1 shows a block diagram of an embodiment of an electronic apparatus according to the invention;

Fig. 2 is a flowchart showing an embodiment of a control method according to the invention;

Fig. 3 is a flowchart showing an embodiment of determination of the pointing device according to the invention;

Figs. 4A-4E show embodiments of input gestures according to the invention; and

Fig. 5 is a flowchart showing an embodiment of an operation flow according to the invention.

### DETAILED DESCRIPTION OF THE INVENTION

The following description is of the best-contemplated mode of carrying out of the invention. This description is made for the purpose of illustrating the general principles of the invention and should not be taken in a limiting sense. The scope of the invention is best determined by reference to the appended claims.

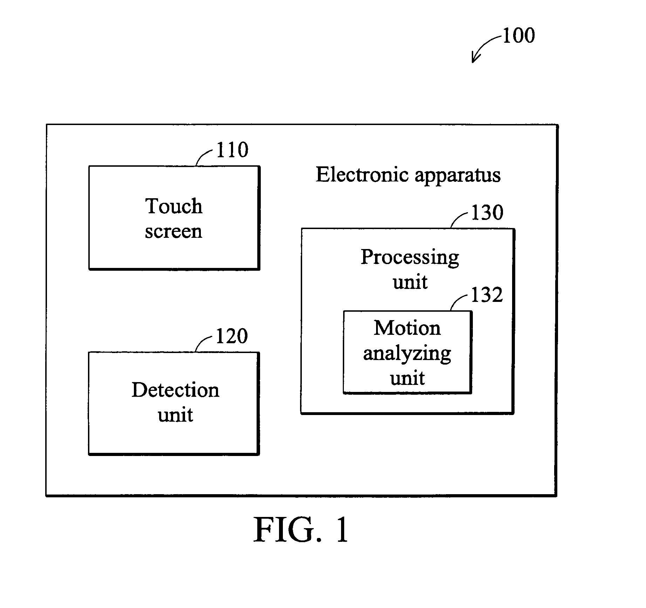

The invention is described with reference to Figs. 1 through 5, which generally relate to an electronic apparatus having a touch screen that can differentiate between contact or control by a finger or a stylus for providing further control of the electronic apparatus for users. In the following detailed description, reference is made to the accompanying drawings which from a part hereof, shown by way of illustration of specific embodiments. These embodiments are described in sufficient detail to enable those skilled in the art to practice the invention, and it is to be understood that other embodiments may be utilized and that structural, logical and electrical changes may be made, without departing from the spirit and scope of the invention. The following detailed description is, therefore, not to be taken in a limiting sense. It should be understood that many of the elements described and illustrated throughout the specification are functional in nature and may be embodied in one or more physical entities or may take other forms beyond those described or depicted.

Embodiments of the invention provide an electronic apparatus with a touch screen and related control method thereof, wherein the control method can distinguish whether contact of the touch screen is generated by a finger or a stylus and perform specific processes when the contact of the touch screen is generated by the finger for providing more intuitive operation of the electronic apparatus for users.

Fig. 1 shows a block diagram of an embodiment of an electronic apparatus 100 according to the invention. As shown in Fig. 1, the electronic apparatus 100 at least comprises a touch screen 110, a detection unit 120 and a processing unit 130.

The touch screen 110 is capable of operating in a finger-touched mode or a stylus-touched mode and can be touched or contacted by a finger or a stylus. The electronic apparatus 100 may be, for example, any kind of handheld electronic device such as smart phones, personal digital assistants (PDAs), handheld computer systems or tablet computers, or any devices that allows a user to control the function of the devices by touching and selecting control items from a touch screen.

The detection unit 120 is used for detecting whether the touch screen 110 is touched by the finger or the stylus. For example, the detection unit 120 will continually detect whether the touch screen 110 is touched by a finger or a stylus and send a message to inform the processing unit 130 in response to a detected touch by the finger or the stylus, wherein the sent message comprises information about the pressure value generated by the touch or the contact. After contact with the touch screen 110 is detected by the detection unit 120, the processing unit 130 further determines whether the contact is initiated by the finger or the stylus. After it is determined that the contact is initiated by the finger, a motion analyzing unit 132 of the processing unit 130 further analyzes an input gesture type generated from a motion of the finger and transfers the input gesture to a control signal so as to control a target screen currently operating on the touch screen 110.

When the touch screen 110 is operated in the stylus-touched mode, the processing unit 130 may use the inputted contact signal to process as a normal contact event handling based on a predetermined procedure such as converting the contact signals to corresponding mouse messages. When the touch screen 110 is operated in the finger-touched mode, the processing unit 130 may convert the inputted contact signals to corresponding input gestures for performing a specific finger-touched event handling such as to scroll, to zoom in or out the target screen.

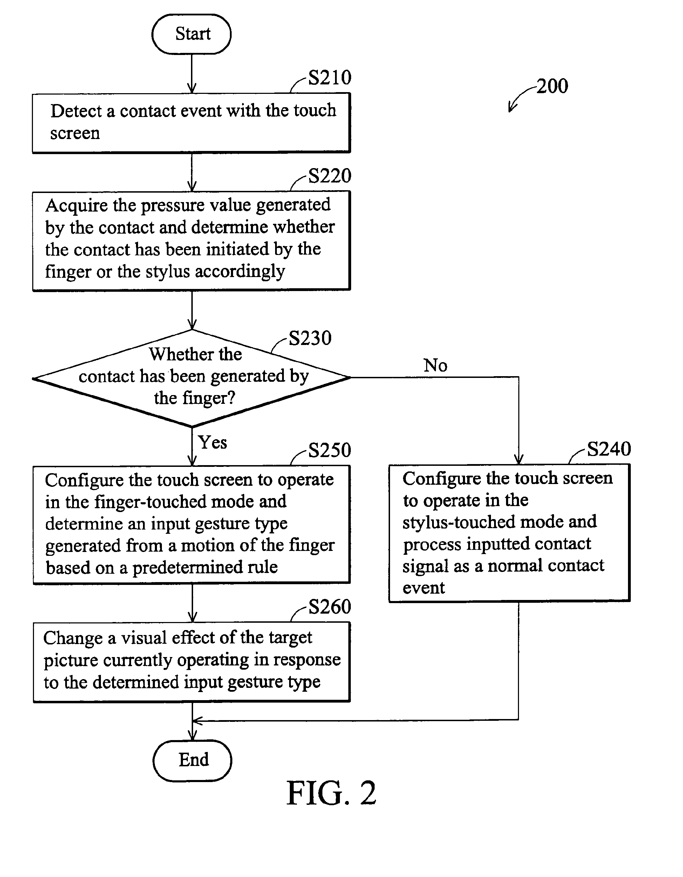

Fig. 2 is a flowchart showing an embodiment of a control method according to the invention. Referring to Fig. 1 and Fig. 2, in step S210, the detection unit 120 detects a contact event with the touch screen 100. Meanwhile, the detection unit 120 acquires a pressure value that is generated from the contact event in which the pressure value is acquired by measuring a pressed depth that is generated by the contact with the touch screen. When the contact is generated or initialed by the finger, the pressure value P, i.e. the pressed depth, will be lower due to the contact area (a generated contact area A) being larger than that initialed by the stylus. Contrarily, when the contact is generated or initialed by the stylus, the pressure value P will be higher due to the contact area (a generated contact area A) being smaller than that initialed by the finger such that the pressed force is more centralized. In other words, a contact initiated by the finger will generate a larger contact area A and smaller pressure value P. The detection unit 120 sends the pressure value to the processing unit 130.

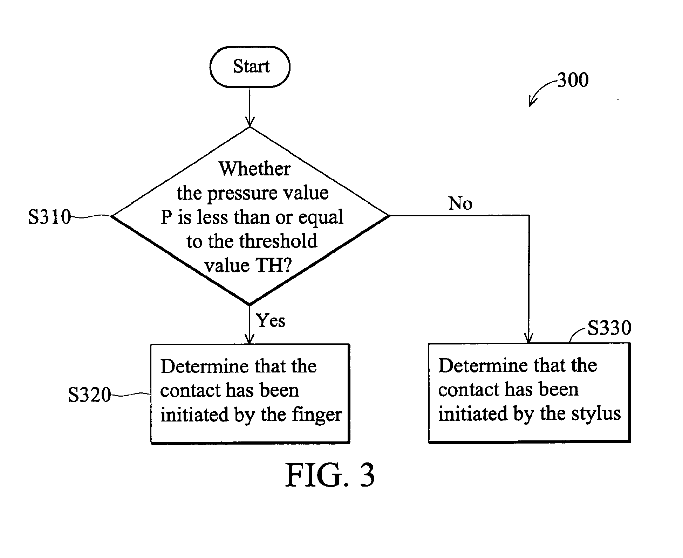

Thereafter, in step S220, the processing unit 130 acquires the pressure value P generated by the contact and determines whether the contact is initiated by the finger or the stylus accordingly. The processing unit 130 may determine whether the contact is initiated by the finger or the stylus according to a comparison result of the acquired pressure value and a threshold value TH, wherein the threshold value TH is defined to be a pressure value that differentiates pressure between a finger and a stylus. The processes showing how the processing unit 130 discriminates contact between a finger and a stylus according to the pressure value P are detailed below with reference to Fig. 3.

Fig. 3 is a flowchart 300 showing an embodiment of the invention, wherein the processing unit 130 differentiates pressure between a finger and a stylus according to the pressure value P.

First, the processing unit 130 determines whether the pressure value P is less than or equal to the threshold value TH (step S310). If so, the contact is determined to be initiated by the finger (step S320). When the pressure value P exceeds the threshold value TH (No in step S310), the contact is determined to be initiated by the stylus (step S330).

Thereafter, when determining that the contact is generated by the stylus (No in step S230), in step S240, the touch screen 110 is configured to be operated in the stylus-touched mode. Thus, the processing unit 130 processes the inputted contact signal as a normal contact event, for example, converts the contact signals to corresponding mouse messages. When determining that the contact is generated by the finger (Yes in step S230), in step S250, the touch screen 110 is configured to be operated in the finger-touched mode and the motion analyzing unit 132 of the processing unit 130 may further analyze an input gesture type generated from a motion of the finger and transfer the input gesture to a control signal based on a predetermined rule.

The motion analyzing unit 132 may detect contact points/signals within a predetermined time period and obtain the first and the second contact points, calculate a shift direction and a distance between the first and the second contact points and recognize the input gesture type according to a predetermined formula and the calculated distance.

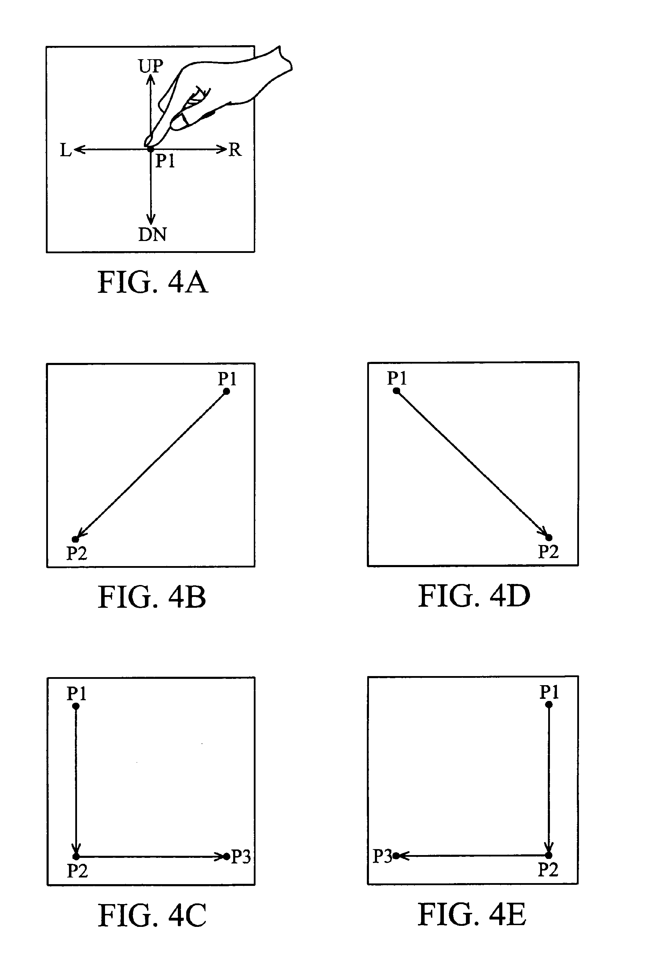

Figs. 4A-4E show embodiments of input gestures according to the invention in which Fig. 4A shows an embodiment of directional gestures, Figs. 4B and 4D show embodiments of diagonal gestures and Figs. 4C and 4E show embodiments of combined gestures. The input gesture type may further comprise, for example, but is not limited thereto, a directional gesture, a diagonal gesture and a combined gesture that is generated by combining the directional gesture and the diagonal gesture. Referring to Fig. 4A, the directional gesture may comprise a gesture generated by the finger that presses a point of the target screen and drags the point to any upward (e.g. dragging the finger from the point P1 toward the direction of the point UP), downward (e.g. dragging the finger from the point P1 toward the direction of the point DN), leftward (e.g. dragging the finger from the point P1 toward the direction of the point L) or rightward (e.g. dragging the finger from the point P1 toward the direction of the point R) direction. Note that the directional gesture may serve as a scrolling gesture for scrolling content of the target screen currently operating. For example, the content of the target screen currently operating will be scrolled upward if the input gesture is a moving up gesture.

The diagonal gesture is defined as a gesture that is generated by moving the finger from a diagonal direction of the target screen such as moving the finger from the left top position to the right bottom position of the target screen (e.g. dragging the finger from the point P1 toward the direction of the point P2 as shown in Fig. 4D) or from the right top position to the left bottom position of the target screen (e.g. dragging the finger from the point P1 toward the direction of the point P2 as shown in Fig. 4B). Note that the diagonal gesture may serve as a zooming in or zooming out gesture for zooming in or out of the content of the target screen currently operating. For example, a command for zooming in to the content of the target screen currently operating will be made if the user inputs the diagonal gesture shown in Fig. 4B while a command for zooming out of the content of the target screen will be made if the user inputs the inversed diagonal gesture shown in Fig. 4B (e.g. dragging the finger from with the point P2 toward the direction of the point P1).

The combined gesture is a gesture that is generated by combining the directional gesture and the diagonal gesture, which may be a combination of more then one directional gestures that forms a fixed combined shape such as a text shape or a normal shape. For example, a combined gesture, a first L-shaped gesture (e.g. dragging the finger from with the points from P1, P2 to P3 that form a L-shaped trace as shown in Fig. 4C), is formed by combining the moving down and moving right gestures while another combined gesture, a second L-shaped gesture (e.g. dragging the finger from with the points from P1, P2 to P3 as shown in Fig. 4E), is formed by combining the moving down and moving left gestures. Note that the combined gesture may serve as a rotating gesture for rotating the content of the target screen currently operating. For example, a command for rotating the content of the target screen currently operating will be invoked if the user inputs the L-shaped gesture shown in Fig. 4C or Fig. 4E.

With the different gestures, users may input or issue control commands with their finger to operate a target screen. It is to be noted that the input gestures may be predefined as desired and the processing unit 130 may perform an operation corresponding to a gesture according to the predefined input gesture.

Referring again to Fig. 2, when the input gesture type is determined, in step S260, the processing unit 130 may trigger a visual effect of the target screen currently operating in response to the determined input gesture type. For example, the processing unit 130 may scroll, zoom in or out, rotate the target screen currently operating in response to the determined input gesture type, but it is not limited thereto.

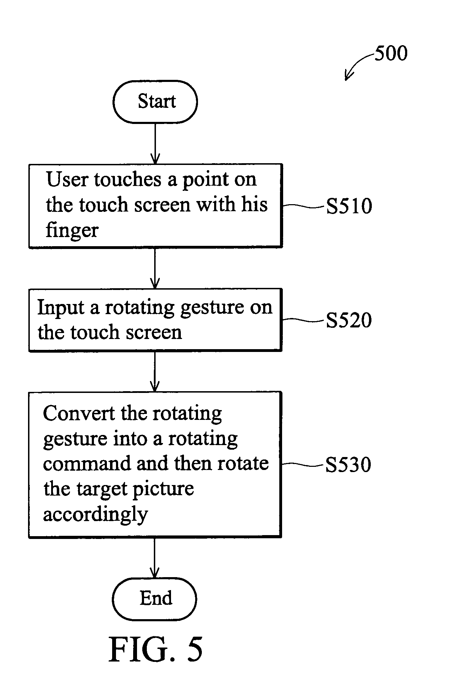

Fig. 5 is a flowchart 500 showing an embodiment of an operation flow according to the invention, for rotating a target screen on the touch screen 110. Allowing with reference to Fig. 1, in this embodiment, it is assumed that the user desires to rotate the target screen. First, in step S510, the user touches a point on the touch screen 110 with his finger. Therefore, the processing unit 130 configures the touch screen 110 to be operated in the finger-touched mode.

Thereafter, in step S520, the user inputs a rotating gesture (such as the L-shaped gesture shown in Fig. 4D). When recognizing or determining that the input gesture is the rotating gesture, in step S530, the processing unit 130 will convert the rotating gesture into a rotating command and then rotate the target screen accordingly.

In summary, the electronic apparatus having a touch screen and the related control method of the invention, can differentiate between whether the touch screen is contacted by a finger or a stylus by determining a pressure value. When it is determined that the contact is initiated by the finger, an input gesture type generated from a motion of the finger is further determined so as to trigger the visual effects of the target screen currently operating in response to the determined input gesture type for providing a more diverse control method for users.

Electronic apparatuses and control methods thereof, or certain aspects or portions thereof, may take the form of an executable code (i.e., executable instructions) embodied in any type of media, such as floppy diskettes, CD-ROMS, hard drives, or any other machine-readable storage medium, wherein, when the executable code is loaded into and executed by a machine, such as a computer, the machine thereby becomes an apparatus for practicing the methods. The methods may also be embodied in the form of an executable code transmitted over some transmission medium, such as electrical wiring or cabling, through fiber optics, or via any other form of transmission, wherein, when the executable code is received and loaded into and executed by a machine, such as a computer, the machine becomes an apparatus for practicing the disclosed methods. When implemented on a general-purpose processor, the executable code combines with the processor to provide a unique apparatus that operates analogously to application specific logic circuits.

Certain terms are used throughout the description and claims to refer to particular system components. As one skilled in the art will appreciate, consumer electronic equipment manufacturers may refer to a component by different names. This document does not intend to distinguish between components that differ in name but not function.

While the invention is described by way of example and in terms of preferred embodiment, it is to be understood that the invention is not limited thereto. To the contrary, it is intended to cover various modifications and similar arrangements (as would be apparent to the skilled in the art). Therefore, the scope of the appended claims should be accorded to the broadest interpretation so as to encompass all such modifications and similar arrangements.

## Claims

1. A control method for an electronic apparatus having a touch screen, comprising:
detecting a contact with the touch screen;
determining whether the contact is initiated by a finger or a stylus;
determining an input gesture type generated from a motion of the finger based on a predetermined rule after the contact is initiated by the finger; and
triggering visual effects on the target screen currently operating in response to the determined input gesture type.

2. The control method as claimed in claim 1, wherein the step of determining whether the contact is initiated by a finger or a stylus further comprises:
acquiring a pressure value generated from the contact; and
determining that the contact is initiated by the finger or the stylus according to a comparison result of the acquired pressure value and a threshold value.

3. The control method as claimed in claim 2, further comprising:
determining that the contact is initiated by the finger when the acquired pressure value is less than or equal to the threshold value; and
determining that the contact is initiated by the stylus when the acquired pressure value exceeds the threshold value.

4. The control method as claimed in claim 2, wherein the pressure value is acquired by measuring a pressed depth generated by the contact with the touch screen.

5. The control method as claimed in claim 1, wherein the step of determining an input gesture type generated from a motion of the finger based on a predetermined rule further comprises:
detecting contact points within a predetermined time period and obtaining the first and the second contact points;
calculating a shift direction and a distance between the first and second contact points; and
obtaining the input gesture type according to the shift direction and the distance.

6. The control method as claimed in claim 1, wherein the step of triggering visual effects of a target screen currently operating in response to the determined input gesture type further comprises:
scrolling the target screen currently operating in response to a scrolling gesture.

7. The control method as claimed in claim 6, further comprising:
zooming in or zooming out of the target screen currently operating in response to a zooming gesture.

8. The control method as claimed in claim 7, wherein the step of determining whether the contact is initiated by a finger or a stylus further comprises:
rotating the target screen currently operating in response to a rotating gesture.

9. The control method as claimed in claim 5, wherein the input gesture type further comprises a directional gesture, a diagonal gesture and a combined gesture that is generated by combining the directional gesture and the diagonal gesture.

10. The control method as claimed in claim 9, wherein the directional gesture further comprises a moving up gesture, a moving down gesture, a moving left gesture and a moving right gesture generated by pressing a point of the target screen by the finger and dragging the point upward, downward, leftward or rightward respectively for dragging objects on the target screen.

11. The control method as claimed in claim 9, wherein the diagonal gesture is used for zooming in or zooming out of the target screen and the combined gesture is used for rotating the target screen currently operating in response to a rotating gesture.

12. An electronic apparatus, comprising:
a touch screen;
a detection unit, for detecting whether the touch screen is contacted; and
a processing unit, determining whether the contact is initiated by a finger or a stylus, determining an input gesture type generated from a motion of the finger based on a predetermined rule after the contact is initiated by the finger and triggering visual effects of a target screen currently operating in response to the determined input gesture type.

13. The electronic apparatus as claimed in claim 12, wherein the processing unit further comprises:
a motion analyzing unit for analyzing the motion of the finger and determining the input gesture type generated from the motion based on the predetermined rule.

14. The electronic apparatus as claimed in claim 13, wherein the motion analyzing unit further detects contact points within a predetermined time period and obtains the first and the second contact points, calculates a shift direction and a distance between the first and second contact points and obtains the input gesture type according to the shift direction and the distance.

15. The electronic apparatus as claimed in claim 12, wherein the detection unit further detects a pressure value generated by the contact with the touch screen, wherein the pressure value is acquired by measuring a pressed depth that is generated by the contact with the touch screen.

16. The electronic apparatus as claimed in claim 15, wherein the processing unit further determines that the contact is initiated by the finger or the stylus according to a comparison result of the acquired pressure value and a threshold value, wherein the contact is determined to be initiated by the finger when the acquired pressure value is less than or equal to the threshold value and the contact is determined to be initiated by the stylus when the acquired pressure value exceeds the threshold value.

17. The electronic apparatus as claimed in claim 12, wherein the processing unit further scrolls the target screen currently operating in response to a scrolling gesture, zooms in or zooms out the target screen currently operating in response to a zooming gesture, and/or rotates the target screen currently operating in response to a rotating gesture.

18. The electronic apparatus as claimed in claim 11, wherein the input gesture type further comprises a directional gesture, a diagonal gesture and a combined gesture that is generated by combining the directional gesture and the diagonal gesture.

19. The electronic apparatus as claimed in claim 18, wherein the directional gesture further comprises a moving up gesture, a moving down gesture, a moving left gesture and a moving right gesture generated by pressing a point of the target screen by the finger and dragging the point upward, downward, leftward or rightward respectively for dragging the target screen.

20. The electronic apparatus as claimed in claim 18, wherein the diagonal gesture is used for zooming in or zooming out the target screen and the combined gesture is used for rotating the target screen.
